# EUROPEAN PATENT APPLICATION

(11) **EP 1 946 885 A1**
(43) Date of publication of application: **23.07.2008**
(21) Application number: 07122573.4
(22) Date of filing: 07.12.2007
(51) Int. Cl.: B23Q 3/06

(54) **Fixture for positioning gas turbine engine components**

(30) Priority: 12.12.2006 US 609563
(71) Applicant: General Electric Company, Schenectady, NY 12345 (US)
(72) Inventor: Gabriel, Thomas Andrew, Batavia, OH 45103 (US); Bezdecny, Michelle Rene, Niskayuna, NY 12309 (US); Ramamurthy, Rajesh, Clifton Park, NY 12065 (US); Ash, Clarence Albert, Burlington, KY 41005 (US); Graham, Michael Evans, Slingerlands, NY 12159 (US)
(74) Representative: Illingworth-Law, William Illingworth

(57) **Abstract**

A fixture (200) for positioning a gas turbine engine (10) component is provided. A fixture (200) includes, a stationary portion (204) including at least one stationary datum locator (208,210) extending outward from the stationary portion. A fixture (200) further includes a movable portion (206) including at least one movable datum locator extending from the movable portion, the at least one movable datum locator is substantially parallel to the at least one stationary datum locator, the movable portion is movable in a direction away from the stationary portion.

## Description

### BACKGROUND OF THE INVENTION

This invention relates generally to manufacturing processes, and more specifically to methods and apparatus for manufacturing components.

At least some known cast turbine airfoils include an internal structure, e.g., a cooling chamber, that is defined by internal features. During the casting process, known internal structures can "float" with respect to the airfoil which may result in casting walls with varying thicknesses. The varying thicknesses can cause uncertainty with respect to the locations of the cooling chamber's internal features. At least some known turbine airfoils are fabricated to include cooling openings to facilitate protecting the component from thermal damage during operation. As such, during the manufacturing, a number of cooling openings are drilled through the exterior surface after the casting process. The location of each cooling opening may be critical to ensure proper cooling of the airfoil. Consequently, if the locations of the internal features are not precisely known, the machining processes may damage the internal structure as the airfoil cooling openings are formed.

Several machining processes exist that are directed to the machining of components. However, known machining methods rely on accurately measuring the external features to determine the where to machine the component. More specifically, known fabrication methods do not determine the location of the internal features relative to the external features. As a result, the fabrication of components may be costly due to significant scrap and rework of the components and lost time.

### BRIEF DESCRIPTION OF THE INVENTION

In one aspect, a method for manufacturing a component is provided. The method includes locating a plurality of pre-determined internal features defined across an internal surface of the component and determining a model of the component based on the located internal features. The method also includes manufacturing a portion of the component based on the model.

In another aspect, a fixture for positioning a gas turbine engine component is provided. The fixture includes a stationary portion including at least one stationary datum locator extending outward from the stationary portion. The fixture also includes a movable portion including at least one movable datum locator extending from the movable portion. The at least one movable datum locator is substantially parallel to the at least one stationary datum locator. The movable portion is movable in a direction that is away from the stationary portion.

In another aspect, a fixture for positioning a gas turbine component that includes at least one root cavity is provided. The fixture includes a stationary portion including at least one stationary datum locator that extends outward from the stationary portion. The at least one stationary datum locator is configured to fit within the at least one root cavity of the component. The fixture also includes a movable portion including at least one movable datum locator that extends from the movable portion. The movable portion is movable in a direction away from the stationary portion.

### BRIEF DESCRIPTION OF THE DRAWINGS

Embodiments of the present invention will now be described, by way of example only, with reference to the accompanying drawings, in which:
Figure 1 is a schematic illustration of an exemplary gas turbine engine;
Figure 2 is an enlarged perspective view of an exemplary rotor blade that may be machined with an embodiment of the present invention;
Figure 3 is a cross-sectional view of the exemplary rotor blade shown in Figure 2;
Figure 4 illustrates shifting that can occur during the casting process of the rotor blade shown in Figures 2-3;
Figure 5 illustrates an exemplary fixture that may be used to position a rotor blade during fabrication;
Figure 6 is an enlarged perspective view of a portion of the fixture shown in Figure 5;
Figure 7 illustrates a portion of a component coupled in position on the fixture shown in Figures 5-6; and
Figure 8 illustrates datum points that can be obtained using mapping methods to compute a model or representation of the external shape of the component shown in Figures 6-7.

### DETAILED DESCRIPTION OF THE INVENTION

The present invention facilitates the manufacturing of components. Although only gas turbine engine components, specifically rotor blades, are discussed herein, those having ordinary skill in the art will appreciate that the present invention is also applicable to any component having internal features or any other recognizable feature on the internal surface that may be reached through cavity holes, and is also applicable to any technology used to measure internal features with respect to external features. Furthermore, although the discussion of the exemplary embodiment relates to machining a component (i.e., drilling, making grooves, smoothing, etc.), the exemplary and other embodiments may be used to construct or inspect a component.

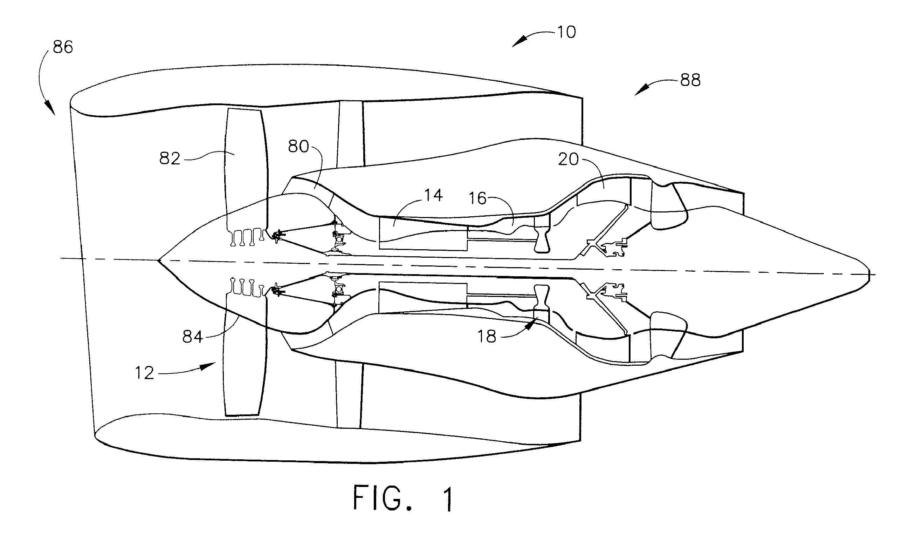

Figure 1 is a schematic illustration of a gas turbine engine 10 including a fan assembly 12, a high pressure compressor 14, and a combustor 16. Engine 10 also includes a high pressure turbine 18, a low pressure turbine 20, and a booster 80. Fan assembly 12 includes an array of fan blades 82 extending radially outward from a rotor disc 84. Engine 10 has an intake side 86 and an exhaust side 88.

In operation, air flows through fan assembly 12 and compressed air is supplied to high pressure compressor 14. The highly compressed air is delivered to combustor 16. Airflow (not shown in Figure 1) from combustor 16 drives turbines 18 and 20, and turbine 20 drives fan assembly 12.

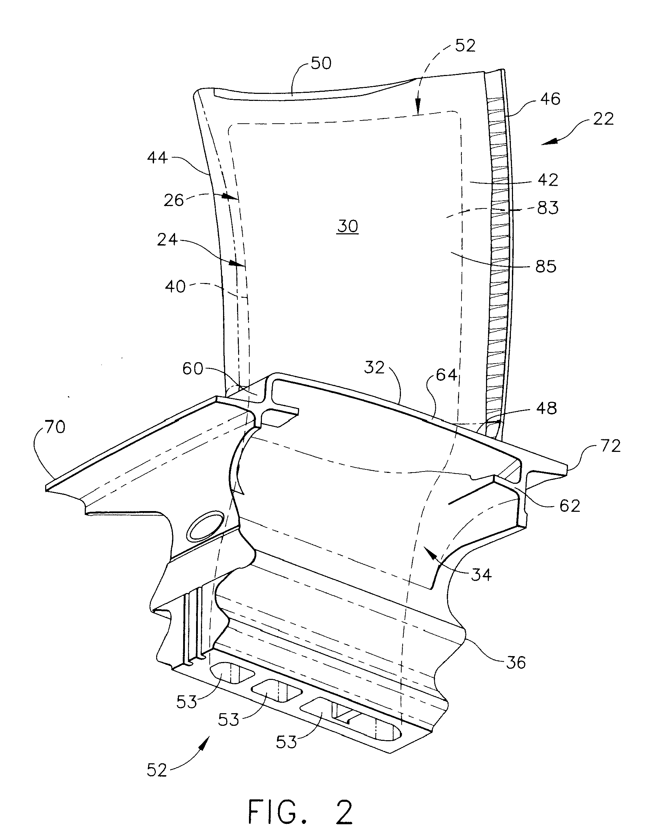

Figure 2 is an enlarged perspective view of a portion of an exemplary rotor blade 22 that may be used with a rotor assembly (not shown) and viewed from a pressure side 24. Rotor blade 22 also includes an opposite suction side 26. Rotor blades 22 extend radially outward from a rotor disk (not shown) of the rotor assembly, and each includes an airfoil 30, a platform 32, a shank 34, and a dovetail 36. In an alternative embodiment, rotor blades 22 are mounted within a rotor spool (not shown).

Each airfoil 30 includes a first sidewall 40 and an opposite second sidewall 42. First sidewall 40 is convex and defines the suction side 26 of airfoil 30, and second sidewall 42 is concave and defines the pressure side 24 of airfoil 30. Sidewalls 40 and 42 are joined together at a leading edge 44 and at an axially-spaced trailing edge 46 of airfoil 30. More specifically, airfoil trailing edge 46 is spaced chord-wise and downstream from airfoil leading edge 44.

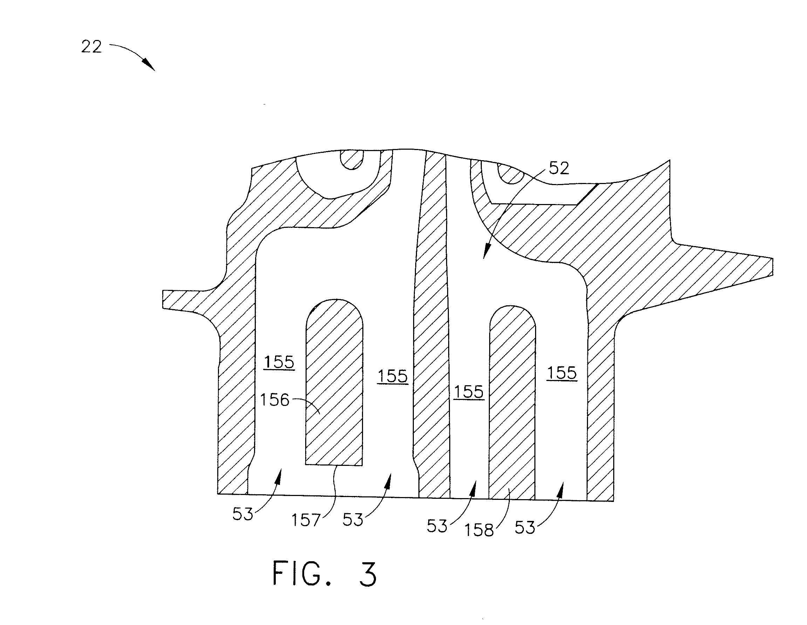

First and second sidewalls 40 and 42, respectively, extend longitudinally or radially outward in span from a blade root 48 positioned adjacent to platform 32, to an airfoil tip 50. Airfoil tip 50 defines a radially outer boundary of an internal cooling chamber 52 (shown in Figure 3). Cooling chamber 52 is bounded within airfoil 30 between sidewalls 40 and 42, and, in the exemplary embodiment, extends through platform 32 and shank 34, and into dovetail 36. More specifically, airfoil 30 includes an inner surface 83 and an outer surface 85, and cooling chamber 52 is defined by airfoil inner surface 83. In the exemplary embodiment, cooling chamber 52 includes a plurality of root openings 53 which lead into root cavities 155 (shown in Figure 3).

Platform 32 extends between airfoil 30 and shank 34 such that each airfoil 30 extends radially outward from each respective platform 32. Shank 34 extends between platform 32 and dovetail 36. Dovetail 36 extends radially inwardly from shank 34 and facilitates securing rotor blade 22 to the rotor disk. In the exemplary embodiment, platform 32 includes an upstream side or skirt 60 and a downstream side or skirt 62 which each extend between a pressure-side edge 64 and an opposite suction-side edge (not shown). In the exemplary embodiment, platform 32 also includes a forward angel wing 70, and an aft angel wing 72 that each extends outwardly from respective skirts 60 and 62.

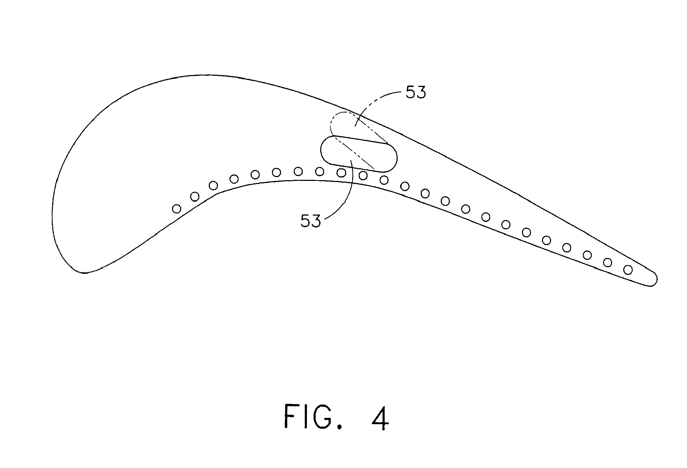

Figure 3 is a cross-sectional view of an alternative embodiment of rotor blade 22 including a cooling chamber 52 defined therein. In the exemplary embodiment, rotor blade 22 includes four root openings 53 that each lead to separate root cavities 155 defined within blade 22. A first wall 156 separates two of the root cavities 155 and a second wall 158 separates the remaining two root cavities 155. In the exemplary embodiment, rotor blade 22 also includes a notch 157 defined by wall 156. Typically, rotor blades 22 as well as other airfoils, such as vanes, include between two and five root cavities 155. When casting rotor blade 22, the root cavities 155 may shift during the process causing at least one of the respective cooling chambers 52 to shift as well, as shown in Figure 4, for example. The final placement of root cavities 155 may have a direct relationship with the overall shift of the remaining portion of cooling chamber 52 (not shown in Figure 4). Thus, knowing the placement of the cavities 155 or cooling chambers 52 relative to the external features facilitates machining the parts so as to not damage the internal features.

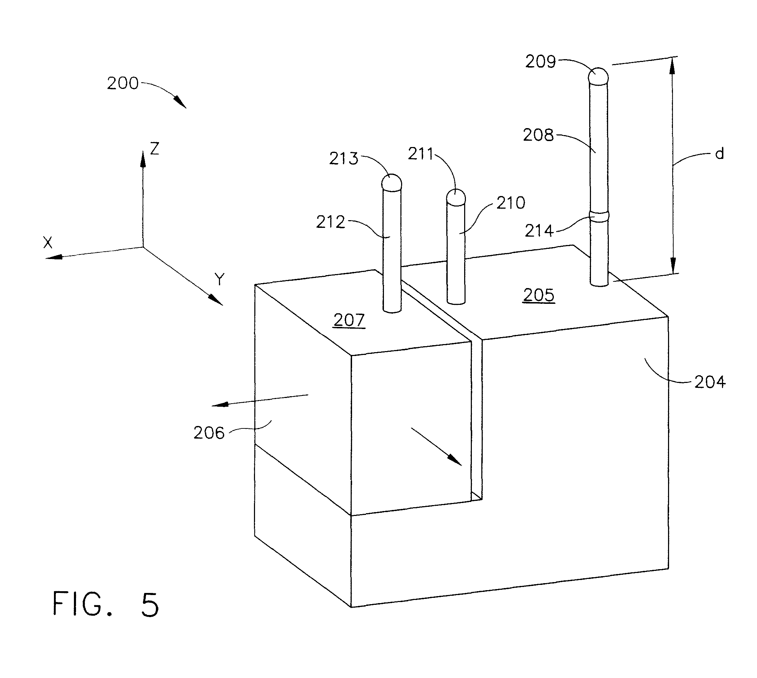

Figure 5 illustrates an exemplary fixture 200 that may be used to position a component (e.g., rotor blade 22) during or prior to a machining process. Although the component discussed herein is a rotor blade 22, other components may be manufactured using embodiments of the present invention such as components that have exposed openings leading to cavities within the component.

Fixture 200 includes a stationary portion 204 that includes an outer surface 205, and a movable portion 206 that includes an outer surface 207. Although outer surfaces 205 and 207 are substantially coplanar in the exemplary embodiment, in other embodiments, outer surfaces 205 and 207 are non-coplanar. Additionally, although the exemplary embodiment has one stationary portion 204 and one movable portion 206, other embodiments may include a number of portions, movable or stationary. In the exemplary embodiment, stationary portion 204 includes a first datum locator 208 and a second datum locator 210. Each datum locator 208 and 210 extends a pre-determined distance d from outer surface 205. Datum locators 208 and 210 may be removably secured to or fixedly secured to surface 205. Although embodiments of the present invention include datum locators 208 and 210 that extend a variety of distances d, in alternative embodiments the length of each datum locator 208 and 210 is substantially equal. In the exemplary embodiment, datum locator 208 extends a farther distance from surface 205 than datum locator 210. Furthermore, in the exemplary embodiment, datum locators 208 and 210 are substantially perpendicular to outer surface 205 in order to facilitate inserting the datum locators 208 and 210 into root cavities 155. In the exemplary embodiment, datum locators 208 and 210 are locating pins that are each substantially cylindrical.

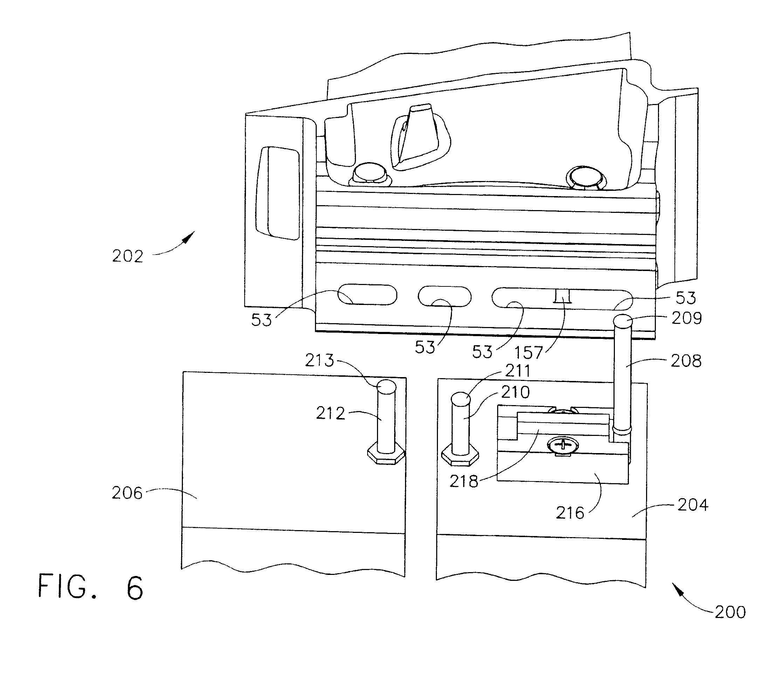

When fixture 200 is in use, datum locators 208 and 210 are inserted into a respective root cavity 155 of a component 202 (shown in Figure 6) and are positioned against a pre-determined location of the internal surface of component 202. To facilitate inserting locators 208 and 210 through openings 53 and into cavities 155, and to facilitate the proper positioning of locators 208 and 210, movable portion 206 is movable along the x-axis and along the y-axis. Datum locators 208 and 210 also each include a respective head portion 209 and 211, respectively. Head portions 209 and 211 are positionable against internal features, such as cooling openings, grooves, or protuberances, within their respective root cavities 155. In some embodiments, head portions 209 and 211 may be sized or shaped to receive, or to complement the internal feature which the head portions 209 and 211 should locate. Furthermore, datum locators 208 and 210 may also include a rib portion 214. Although rib portion 214 is only illustrated on datum locator 208, each datum locator may include a rib portion 214 or a plurality of rib portions 214. Each rib portion 214 also facilitates locating a pre-determined internal feature when fixture 200 is used. Similarly, rib portion 214 may be sized or shaped to receive or complement a pre-determined internal feature of the root cavity 155 that each rib portion 214 is inserted within.

Movable portion 206 also includes one or more datum locators 212 that extend from surface 207. In the exemplary embodiment, datum locator 212 also includes a head portion 213 that locates a pre-determined internal feature within root cavity 155 when fixture 200 is in use. Furthermore, head portion 213 may be sized or shaped to receive or complement the pre-determined internal feature of root cavity 155.

In the exemplary embodiment, movable portion 206 is slidably coupled to stationary portion 204. More specifically, movable portion 206 is movable in a direction along the x-axis that is both to and from stationary portion 204, and movable in a direction along the y-axis that may be both port and starboard of stationary portion 204. More specifically, movement of portion 206 facilitates component 202 being secured by datum locators 208, 210, and 212, which create opposing forces with respect to each other. In one embodiment, the movement of movable portion 206 in a direction along the x-axis is substantially parallel to a plane defined by outer surface 205. More specifically, in the exemplary embodiment, movable portion 206 is selectively movable in two different directions away from stationary portion 204. For example, movable portion 206 may be moved in a first direction along the x-axis and then moved away from stationary portion 204 in a second direction along the y-axis. Although the x-direction and y-direction are each substantially perpendicular to each other, in alternative embodiments, movable portion 206 may be movable in any direction that facilitates positioning component 202 such that the datum locators 208, 210, and 212 are positioned against and locate their respective pre-determined features, and such that the datum locators 208, 210, and 212 cooperate to restrict movement of, and to securely couple, component 202 to fixture 200.

In one embodiment, fixture 200 is coupled to or includes a micrometer for motion along the x-axis and another micrometer for motion along the y-axis. The micrometers are mounted onto fixture 200 and enable the motion of the movable portion 206. The micrometers provide a consistent force applied to component 202 when it is mounted onto fixture 200. Other means may be used to securely and repeatedly fix component 202 in any direction and orientation.

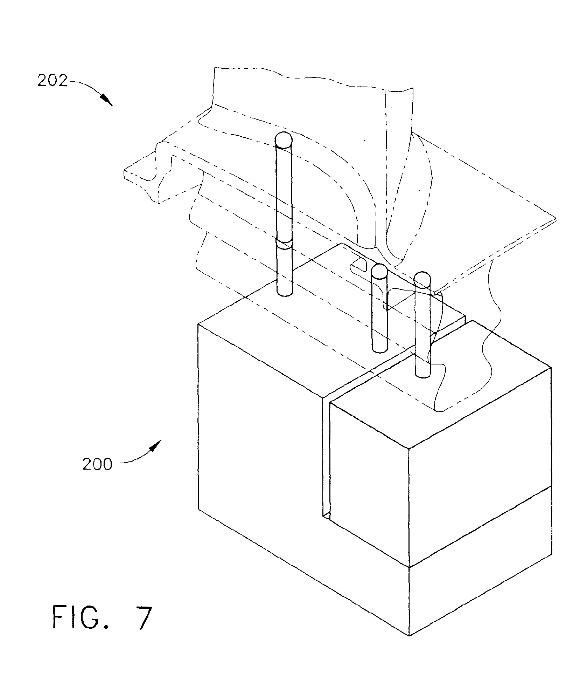

Figure 6 illustrates an enlarged portion of fixture 200. Figure 7 illustrates component 202 coupled to fixture 200 with datum locators 208, 210, and 212 are inserted within. After component 202 is supported by datum locators 208, 210, and 212, movable portion 206 is moved away from stationary portion 204 to facilitate datum locators 208, 210, and 212 being positioned against and locating the internal features of component 202. Datum locators 208, 210, and 212 cooperate to restrict movement of component 202 by contacting their respective internal feature and by inducing a force that limits the movement of component 202. Thus, component 202 is removably secured onto fixture 200.

Each datum locator 208, 210, and 212 is sized and shaped to enable each specific datum locator to locate a specific, pre-determined internal feature defined within component 202. In one embodiment, datum locator 208 is the longest datum locator coupled to fixture 200 and is oriented such that a portion of the cooling chamber 52 or root cavity 155 (not shown in Figure 6) is positioned against and is supported by an end or head portion 209 of datum locator 208 when component 202 is supported by fixture 200. For example, the portion of the cooling chamber 52 resting upon datum locator 208 may correlate to the platform 32 of component 202. Alternatively, datum locators 208, 210, and 212 may have equal heights. It should be noted that datum locators 208, 210, and 212 may be oriented in any orientation and/or may have any height that enables fixture 200 to function as prescribed herein.

In some embodiments, fixture 200 optionally includes a step 216 that provides structural support to component 202. In the exemplary embodiment, step 216 includes a raised section 218 that complements a portion of component 202, such as the root cavities 155. For example, raised section 218 enables notch 157 of blade 22 to contact at least a portion of raised section 218. Moreover, raised section 218 may also enable the internal surface of root cavities 155 to rest along a length of raised section 218, thus locating component 202 along the z-axis. In one embodiment, step 216 is positioned adjacent to datum locator 208 and is fixedly secured to outer surface 205 with threaded fasteners, such as screws.

Embodiments of the present invention also include the step of determining the locations of the internal features of a component and using that information to develop a model of the component. By knowing the locations of some internal features of a portion of the component (e.g., a portion of a cavity) and by knowing the general shape of the component (e.g., external features of the airfoil) relative to those internal features, one can generate or determine a model of the component. This information of the model can later be used in machining the component or for other purposes.

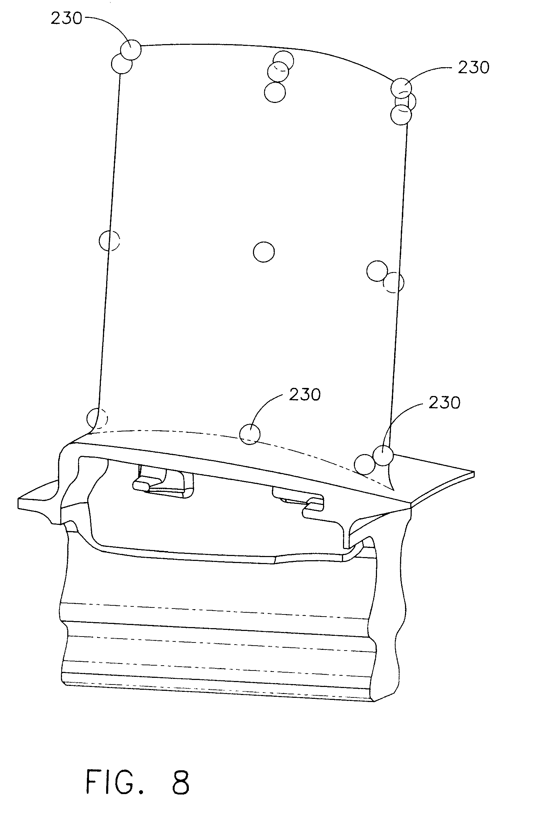

By knowing the location and orientation of datum locators 208, 210, and 212 with respect to fixture 200, the locations of the internal features can be determined or a model or representation of cooling chamber 52 within component 202 may be generated. Figure 8 illustrates exemplary datum points 230 that can be obtained using known mapping methods to compute a model or representation of the external shape of component 202, such as physical or virtual nesting, or optical registration. Using a computer or some other computing device, a complete model of component 202 that represents both the internal structure and the external shape can be generated. Using this information, a tool can be directed to manufacture component 202 more precisely.

In one embodiment, a method for manufacturing a component is provided. The method includes locating a plurality of pre-determined internal features defined across an internal surface of the component and determining a model of the component based on the located internal features. The method also includes manufacturing a portion of the component based on the model.

In one embodiment, a system for machining a component is provided. The system includes a fixture communicatively coupled to a control system, wherein the fixture includes a stationary portion including a stationary surface and at least one stationary datum locator extending from the stationary surface. The fixture also includes a movable portion including an outer surface and at least one movable datum locator extending from and fixedly secured to the outer surface. The at least one movable datum locator is substantially parallel to the at least one stationary datum locator. The movable portion is movable in a direction that is substantially parallel to the stationary surface.

Described herein are a fixture, a method, and a system that may be utilized in a wide variety of machining or manufacturing processes. The fixture enables the system to securely couple and map the internal features of a component. The fixture described herein improves machining processes by reducing the risk to damaging the internal features.

An exemplary embodiment of a fixture for positioning a gas turbine engine component as well as a method and system for machining a component are described above in detail. The fixture and system illustrated are not limited to specific embodiments described herein, but rather, components of each embodiment may be utilized independently and separately from other components described herein. Furthermore, the method is not limited to a specific embodiment described herein, but rather, steps of each method embodiment may be utilized independently and separately from other embodiments described herein.

While the invention has been described in terms of various specific embodiments, those skilled in the art will recognize that the invention can be practiced with modification within the spirit and scope of the claims.

## Claims

1. A fixture (200) for positioning a gas turbine engine (10) component, said fixture comprising:
a stationary portion (204) comprising at least one stationary datum locator (208,210) extending outward from said stationary portion; and
a movable portion (206) comprising at least one movable datum locator extending from said movable portion, said at least one movable datum locator is substantially parallel to said at least one stationary datum locator, said movable portion is movable in a direction away from said stationary portion.

2. A fixture (200) in accordance with Claim 1, further comprising a step portion positioned adjacent to said at least one stationary datum locator (208,210), said step portion configured to support a portion of the component.

3. A fixture (200) in accordance with Claim 1 or Claim 2, wherein said movable portion (206) is configured to move in a first direction and a second direction.

4. A fixture (200) in accordance with Claim 3, wherein said first direction and said second direction are substantially perpendicular to each other.

5. A fixture (200) in accordance with any one of the preceding Claims, wherein said stationary portion (204) comprises at least two datum locators (208,210).

6. A fixture (200) in accordance with Claim 5, wherein said at least two stationary datum locators (208,210) and said at least one movable datum locator are substantially aligned.

7. A fixture (200) in accordance with any one of the preceding Claims, wherein at least one datum locator (208,210) comprises a rib portion (214).

8. A fixture (200) in accordance with any one of the preceding Claims, wherein at least one datum locator (208,210) comprises a head portion (213) configured to at least one of receive and complement a corresponding internal feature of the component.

9. A fixture (200) for positioning a gas turbine component including at least one root cavity (155) of the component, said fixture comprising:
a stationary portion (204) comprising at least one stationary datum locator (208,210) extending outward from said stationary portion, said at least one stationary datum locator configured to fit within the at least one root cavity of the component; and
a movable portion (206) comprising at least one movable datum locator extending from said movable portion, said movable portion is movable in a direction away from said stationary portion.

10. A fixture (200) in accordance with Claim 9, further comprising a step portion positioned adjacent to said at least one stationary datum locator (208,210), said step portion configured to support a portion of the component.
